# EUROPÄISCHE PATENTSCHRIFT

(11) **EP 4 077 922 B1**
(45) Veröffentlichungstag und Bekanntmachung des Hinweises auf die Patenterteilung: **12.08.2026**
(21) Anmeldenummer: 20817279.1
(22) Anmeldetag: 01.12.2020
(51) Int. Cl.: F03D 13/10

(54) **VERFAHREN ZUM ERRICHTEN EINER WINDENERGIEANLAGE**
METHOD FOR ERECTING A WIND POWER PLANT
PROCÉDÉ D'ÉRECTION D'UNE ÉOLIENNE

(30) Priorität: 16.12.2019 DE 102019219722
(43) Veröffentlichungstag der Anmeldung: 26.10.2022
(73) Patentinhaber: thyssenkrupp Carbon2Chem GmbH, 45143 Essen (DE)
(72) Erfinder: KOTTKAMP, Klaus, 47167 Duisburg (DE); QAIMI, Siear, 42489 Wülfrath (DE); GALAL, Galal, 26603 Aurich (DE)
(74) Vertreter: thyssenkrupp Intellectual Property GmbH
(86) Internationale Anmeldenummer: PCT/EP2020/084055
(87) Internationale Veröffentlichungsnummer: WO 2021/121953

(56) Entgegenhaltungen:
- CN-A- 101 429 928
- DE-A1- 10 215 915
- DE-B- 1 198 981
- KR-B1- 101 401 985
- US-A1- 2015 300 037
- US-A1- 2018 282 134

## Beschreibung

### Technisches Gebiet (Technical Field)

Die Erfindung betrifft ein Verfahren zum Errichten einer Windenergieanlage umfassend einen Turm und einer auf dem Turm drehbar angeordneten Gondel, wobei der Turm eine untere Gitterstruktur, einen Übergang und einen oberen Zylinder umfasst, wobei der Übergang den oberen Zylinder mit der Gitterstruktur verbindet, wobei die Gitterstruktur mindestens drei Eckstiele, welche in einem Winkel zur Vertikalen der Gitterstruktur zueinander geneigt sind, Querstreben und/oder Diagonalstreben aufweist, wobei zunächst die Gitterstruktur, auf die Gitterstruktur der Übergang, auf dem Übergang der obere Zylinder und auf dem oberen Zylinder die Gondel nacheinander montiert werden.

### Technischer Hintergrund (Background Art)

Bei der Errichtung von Windenergieanlagen stellt die Montage/Installation der Gondel, der Rotorblätter und Turbine eine große Herausforderung dar. Hierbei müssen mehrere hundert Tonnen auf Höhen von mehr als 90 m bzw. in Schwachwindgebieten auf über 130 m gehoben und sicher in Position gehalten werden, bis eine kraftschlüssige Verbindung mit dem Tragwerk (Turm) hergestellt ist. Oft werden hierbei schwere Krane, meist Raupenkrane oder seltener auch Turmdrehkrane verwendet.

Damit die Standsicherheit dieser Krane gewährleistet ist, muss in dem Arbeitsbereich unterhalb der Stell- und Arbeitsfläche des Krans der Boden aufwändig bearbeitet und ertüchtigt werden, beispielsweise durch Bodenaustausch und Bodenverfestigung. Diese sogenannten "crane pads" können Flächen von ca. 1800 m² bis 2500 m² einnehmen und bis mehreren Meter tief sein.

Die Gesamtkosten für einen schweren Kran (Montage, Demontage, Transport) und Bodenarbeiten (crane pad) pro Windenergieanlage sind sehr hoch. Zusätzlich fallen weitere Kosten für die Erschließung der Wege für den schweren Kran zu und zwischen den jeweiligen Errichtungsorten.

Konzepte, um Kosten durch die Nutzung eines Turmdrehkrans zu verringern, sind bereits erprobt und werden teilweise bereits eingesetzt. Allerdings ist bei den Turmdrehkranen das maximale Hubgewicht nicht ausreichend, um neue Turbinengenerationen mit hoher bzw. höherer Leistung heben zu können.

Somit bleibt als meist verwendete Lösung die Nutzung eines Raupenkrans, welcher für Nabenhöhen bis zu 100 m vielfältig verfügbar ist, für Nabenhöhen über 120 m seltener und mit den zuvor genannten extrem hohen Zusatzkosten verbunden ist, was sich bei den sinkenden Vergütungen für die Einspeisung der gewonnenen Energie nachteilig auf die Wirtschaftlichkeit auswirken kann.

Die Errichtung von Hybridtürmen für Windenergieanlagen mit einer Gitterstruktur im unteren Teil und einem Zylinder im oberen Teil erfordern einen Übergang, welcher als Verbindung zwischen Gitterstruktur und Zylinder eine homogene Lastenverteilung vornimmt, insbesondere um alle dynamischen und extremen Lasten des oberhalb platzierten Zylinders auf die untere Gitterstruktur und auf das Fundament homogen zu übertragen. Beispielhaft beschreibt die Offenlegungsschrift DE 10 2013 110 495 A1 einen gattungsgemäßen Hybridturm.

Die Verwendung von Turmdrehkranen zur Errichtung von Windenergieanlagen ist beispielhaft in der Patentschrift EP 2 715 115 B1 beschrieben.

Die Offenlegungen US 2015/300037 A1 und US 2018/282134 A1 zeigen weitere Beispiele zur Errichtung von Windenergieanlagen.

Für die Errichtung einer Windenergieanlage, welche einen Hybridturm aufweist, besteht Optimierungspotential, insbesondere um hohe Türme mit großen Nabenhöhen wirtschaftlich realisieren zu können.

### Zusammenfassung der Erfindung (Summary of Invention)

Der Erfindung liegt somit die Aufgabe zu Grunde, ein Verfahren zum Errichten einer Windenergieanlage bereitzustellen, mit welchem Windenergieanlagen, insbesondere mit großen Nabenhöhen, wirtschaftlich herstellbar sind.

Gelöst wird diese Aufgabe durch ein Verfahren mit den Merkmalen des Patentanspruchs 1.

Erfindungsgemäß wird nach der Montage der Gitterstruktur ein Turmdrehkran bereitgestellt, welcher an seinem unteren Ende ein Drehgelenk aufweist, der Turmdrehkran über sein Drehgelenk an einem der Eckstiele drehbar angebunden wird und nach der Anbindung der Turmdrehkran in eine vertikale Arbeitsposition gedreht wird.

Die Erfindung stellt ein wirtschaftliches Verfahren zum Errichten einer Windenergieanlage, insbesondere mit großer Nabenhöhe bereit. Unter Nabenhöhe ist die Nabe des Windrotors der Windenergieanlage über der Geländeoberfläche (Aufstellungsort) zu verstehen.

Die zu errichtende Windenergieanlage umfasst einen Turm und eine auf dem Turm drehbar angeordnete Gondel. In der Gondel sind beispielswiese ein Generator und weitere mechanische und elektrische Komponenten untergebracht. Nach außen verläuft eine Nabe, auf welcher Rotorblätter angeordnet werden. Der Turm umfasst eine untere Gitterstruktur, einen Übergang und einen oberen Zylinder, wobei der Übergang den oberen Zylinder mit der Gitterstruktur verbindet. Die Gitterstruktur weist mindestens drei Eckstiele, welche in einem Winkel zur Vertikalen der Gitterstruktur zueinander geneigt sind, Querstreben und/oder Diagonalstreben auf. Die Eckstiele sind derart zueinander geneigt, dass sie im unteren Abschnitt der Gitterstruktur weiter voneinander beabstandet sind als im oberen Abschnitt der Gitterstruktur.

Die untere Gitterstruktur des Turms einer Windenergieanlage kann aus mehreren Längsstreben zusammengesetzt sein, welche die jeweiligen Eckstiele bilden. Die Querstreben können in einer Ebene in der Horizontalen der Gitterstruktur jeweils zwischen den Eckstielen verlaufen. Die Diagonalstreben können insbesondere zwischen zwei jeweils voneinander beabstandeten Ebenen in der Horizontalen der Gitterstruktur jeweils zwischen den Eckstielen verlaufen. Die Längsstreben, Querstreben und Diagonalstreben können aus Profilen gebildet sein, entweder jeweils aus einem Hohlprofil oder aus einem Vollmaterial oder einer Kombination daraus bestehen. Der Querschnitt der Profile kann individuell ausgebildet sein. Die Längsstrebe hat insbesondere einen größeren Durchmesser im Vergleich zur Querstrebe und/oder Diagonalstrebe. Wird ein Hohlprofil verwendet, ist es beispielsweise ein längs- oder ein spiralnahtgeschweißtes Rohr. Besonders bevorzugt weisen Längsstrebe, Querstrebe und/oder Diagonalstrebe einen kreisrunden Querschnitt auf. Weiter bevorzugt können die Profile standardisierte Profile sein, die kostengünstig herstellbar sind und dadurch je nach Ausgestaltung der Gitterstruktur individuell auf die gewünschte Länge zuschneidbar sind. Mindestens zwei oder mehrere in Längserstreckung zusammengesetzte Längsstreben bilden jeweils ein Eckstiel, wobei die Gitterstruktur mindestens drei Eckstiele umfasst. Die Quer- und/oder Diagonalstreben verlaufen jeweils zwischen den Eckstielen und sind mit diesen verbunden, entweder jeweils auf einer Ebene (Querstrebe) oder jeweils zwischen zwei Ebenen (Diagonalstrebe) an einer erstellten Gitterstruktur respektive an einem erstellten Turm. Die Anbindung bzw. Verbindung zwischen den einzelnen Längsstreben, der Diagonal- und/oder Querstreben kann über Knoten erfolgen. Die Gitterstruktur kann genau drei Eckstiele aber auch mehr als drei Eckstiele aufweisen, beispielsweise vier, fünf, sechs, sieben oder acht, oder mehr als acht.

Zunächst wird die Gitterstruktur montiert. Diese kann aus mehreren Teilen (Längsstreben, Querstreben, Diagonalstreben, Knoten) entweder "liegend" zusammengebaut und anschließend mittels eines Krans aufgerichtet werden oder "stehend" in die Höhe, insbesondere unter Verwendung eines Krans, aufgebaut werden, oder eine Kombination aus "liegender" und "stehender" Montage unter Verwendung eines Krans. Am unteren Ende der Gitterstruktur respektive an den unteren Enden der Eckstiele der Gitterstruktur wird ein Fundament oder mehrere lokale Fundamente erstellt, welche insbesondere Mittel aufweisen, die zur Aufnahme und/oder Anbindung des unteren Endes der Gitterstruktur respektive der unteren Enden der Eckstiele der Gitterstruktur dienen.

Auf die Gitterstruktur wird der Übergang montiert und befestigt. Dieser kann aus einzelnen Teilen oder als Ganzes insbesondere mittels Kran gehoben werden. Des Weiteren wird der obere Zylinder, welcher beispielsweise in Längserstreckung aus mehreren zylindrischen Segmenten zusammengesetzt sein kann, insbesondere mittels Kran gehoben und anschließend auf dem Übergang montiert und befestigt. Anschließend wird die drehbar gelagerte Gondel insbesondere mittels Kran gehoben und anschließend auf dem oberen Zylinder montiert und befestigt, wobei die Gondel aus Teilen zusammengesetzt sein kann oder als Ganzes auf dem oberen Zylinder angeordnet werden kann.

Erfindungsgemäß wird nach der Montage der Gitterstruktur ein Turmdrehkran bereitgestellt, welcher an seinem unteren Ende ein Drehgelenk aufweist, der Turmdrehkran über sein Drehgelenk an einem der Eckstiele drehbar angebunden wird und nach der Anbindung der Turmdrehkran in eine vertikale Arbeitsposition gedreht wird.

Der mindestens eine Eckstiel weist mindestens ein Mittel zur drehbaren Aufnahme des Drehgelenks des Turmdrehkrans auf. Der Turmdrehkran wird vorzugsweise nach Erreichen der vertikalen Arbeitsposition gegen Verdrehen gesichert, um während des Betriebs sicherzustellen, dass der Turmdrehkran in seiner vertikalen Arbeitsposition verbleibt.

Der Turmdrehkran umfasst neben dem Drehgelenk an seinem (Fuß-)Ende einen Mast, beispielsweise einen Gittermast, welcher vorzugsweise aus mehreren Segmenten zusammengesetzt respektive montiert ist, einem vom Drehgelenk beabstandeten (Kopf-)Ende mit einem Drehkranz, auf welchem ein Ausleger drehbar montiert ist. Entlang des Auslegers läuft insbesondere eine Laufkatze mit Hebemitteln, über welche Lasten heb- und senkbar sind. Bei Bedarf kann der Turmdrehkran auch einen Gegenausleger optional mit (Gegen-)Gewicht(en) aufweisen, welcher in entgegengesetzter Richtung zur Ausrichtung des Auslegers verläuft.

Zumindest die Montage respektive der Zusammenbau der Gitterstruktur erfolgt beispielsweise über einen Kran, insbesondere einen Standard-(Mobil)kran, welcher vorzugsweise eine Tragkraft von mindestens 50 t bei einer Hubhöhe bis zu 100 m haben kann. Mit diesem Kran kann auch die Installation respektive das Heben des Turmdrehkrans unterstützend zur Anbindung an einen Eckstiel erfolgen. Insbesondere abhängig von der finalen Höhe des zu erstellenden Turms können alternativ auch andere Mittel zum Heben des Turmdrehkrans verwendet werden, beispielsweise Seilzüge.

Der zumindest temporär integrierte Turmdrehkran wird erfindungsgemäß als Gesamtkonzept für die wirtschaftliche und sichere Errichtung einer Windkraftenergieanlage für beliebige Nabenhöhen bereitgestellt. Die Dimensionierung der Gitterstruktur wird je nach technischen Anforderungen, insbesondere abhängig von der zu erstellenden Höhe des Turms und/oder Leistung der Turbine, mit einer definierten Grundfläche ausgelegt, welche bei einer Gitterstruktur mit beispielsweise drei Eckstielen einem gleichseitigen Dreieck entsprechen kann. Durch die Anbindung des Turmdrehkrans an einen der Eckstiele und der nach oben im Winkel zueinander verlaufenden Eckstiele (Verjüngung des Querschnitts in der Vertikalen der Gitterstruktur nach oben) können beim Heben und der Montage des oberen Zylinders oder Segmente zur Erstellung des oberen Zylinders, der Gondel oder Teile zur Erstellung der Gondel und weiteren Komponenten wie zum Beispiel Turbine, Rotorblätter etc., große Biegemomente in den Boden über das Fundament oder über die lokalen Fundamente der mit diesen verbundenen Gitterstruktur abgeleitet werden, so dass ein großer Hebelarm bereitgestellt werden kann. Bei herkömmlichen Kranen wird bzw. muss dieser (fehlende) Hebelarm durch entsprechend hohe Gegengewichte ausgeglichen werden.

Die Gitterstruktur ist bevorzugt bereits im Vorfeld nicht nur für die Lasten aus Wind, Rotorblätter und Turbine ausreichend dimensioniert, sondern in der Dimensionierung ist besonders bevorzugt auch die zumindest temporäre Integration des Turmdrehkrans berücksichtigt.

Zumindest das Heben und Montieren des oberen Zylinders und der Gondel, sowie weiteren Komponenten wie zum Beispiel der Turbine und der Rotorblätter, optional auch das Heben des Übergangs, erfolgt erfindungsgemäß über den an einem Eckstiel angebundenen Turmdrehkran.

Ein weiterer Vorteil der Anbindung des Turmdrehkrans an der Gitterstruktur ist, dass der Turmdrehkran in seiner vertikalen Arbeitsposition sehr nah parallel am (zu errichtenden) oberen Zylinder verläuft, so dass Windkraftanlagen auch bei hohen Windgeschwindigkeiten errichtet werden können, da diese im Vergleich zu Standardkranen bzw. Raupenkranen eine deutlich geringere Wind- und Wetteranfälligkeit aufweisen. Weiterer Vorteil dieser erfindungsgemäßen Ausführung ist, dass der Turmdrehkran leicht zu transportieren ist und wenig Platz für die Montage benötigt. Insbesondere kann dadurch eine schnelle und sichere Errichtung von Windkraftanlagen respektive von ganzen Windparks mit einer deutlich verbesserten zeitlichen Planbarkeit ermöglicht werden. Des Weiteren können zusätzliche erforderliche Baumaßnahmen eines zusätzlichen Fundamentes für einen (Turmdreh-)Kran bzw. "crane pads" entfallen. Ein weiterer logistischer Vorteil ist auch, dass vorzugsweise mit einem einzigen Turmdrehkran ein kompletter Windpark erstellt werden kann. Nach Fertigstellung des Windparks kann dieser im Windpark verbleiben bzw. eingelagert werden. Somit steht der Turmdrehkran für Reparaturen, wie zum Beispiel Austausch von Rotorblätter, Getriebe und/oder Turbinen, sowie für Wartung und Instandhaltungsarbeiten unmittelbar zur Verfügung, was die Ausfallzeiten minimieren und somit zur Wirtschaftlichkeit beitragen kann.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung des erfindungsgemäßen Verfahrens erfolgt eine Anbindung des Turmdrehkrans im oberen Drittel, insbesondere im oberen Viertel, vorzugsweise im oberen Fünftel, der Gitterstruktur. Durch die Anbindung des Turmdrehkrans möglichst "weit oben" an der Gitterstruktur kann dadurch die erforderliche Höhe des Turmdrehkrans so gering wie möglich gehalten werden. Die Höhe des Anbindungspunkts kann sich als Zugewinn der Hubhöhe des Turmdrehkrans bemerkbar machen bzw. bei der Dimensionierung des Turms der Windenergieanlage positiv berücksichtigt werden, soll bedeuten, dass die Gesamthöhe des Turmdrehkrans nicht vom Boden, sondern vom Anbindungspunkt bestimmt wird und der Zugewinn der Höhe der (Höhen-)Differenz zwischen Boden und Anbindungspunkt entspricht.

Gemäß einer Ausgestaltung des erfindungsgemäßen Verfahrens erfolgt eine Anbindung des Turmdrehkrans an einem Knoten der Gitterstruktur. Durch die Verlagerung der Anbindung des Turmdrehkrans in einen Knoten, welcher zwischen zwei in Längserstreckung verlaufenden Längsstreben eines Eckstiels und zur Verbindung eines oder mehrerer Querstreben und/oder eines oder mehrerer Diagonalstreben angeordnet ist, kann eine optimale Krafteinleitung in die Gitterstruktur erfolgen. Der Knoten kann aus einem Teil bestehen oder aus mehreren Teilen zusammengesetzt sein, wobei der Knoten vorzugsweise als Verbindungselement zwischen zwei Längsstreben und mindestens einer Querstrebe und/oder mindestens einer Diagonalstrebe fungiert.

Gemäß einer Ausgestaltung des erfindungsgemäßen Verfahrens kann der Turmdrehkran auf unterschiedlichen Ebenen an der Gitterstruktur angebunden werden. Die Gitterstruktur weist somit mindestens zwei Mittel zur drehbaren Aufnahme des Drehgelenks des Turmdrehkrans an mindestens einem Eckstiel oder verteilt auf mehrere Eckstiele in unterschiedlichen Ebenen auf. Dadurch besteht zusätzlich die Möglichkeit, den Turmdrehkran auf unterschiedlichen Ebenen der Gitterstruktur anzubinden, um unterschiedliche Bauhöhen zu erreichen. Vorzugsweise dienen die Knoten, die entsprechende Mittel zur drehbaren Aufnahme des Drehgelenks des Turmdrehkrans aufweisen, auf unterschiedlichen Ebenen als Anbindungspunkte.

Gemäß einer Ausgestaltung des erfindungsgemäßen Verfahrens wird der Turmdrehkran über mindestens einen Stützarm, welcher mit Abstand zum Drehgelenk des Turmdrehkrans am Turmdrehkran angeordnet ist, an einem bereits montierten Bereich des Turms abgestützt und/oder mit diesem verbunden. Dies verleiht dem Turmdrehkran eine ausreichende Stabilität. Bevorzugt erfolgt ein Heben und/oder Senken der Lasten derart, dass der Ausleger des Drehturmkrans in Draufsicht (Ansicht von oben) den Mittelpunkt des zu erstellenden Turms schneidet. Dadurch lassen sich in Verbindung mit der Abstützung an einem bereits montierten Bereich des Turms über mindestens einen Stützarm höhere Biegemomente umsetzen, da die Abstützung radial zum Mittelpunkt des Turms respektive zum bereits montierten Bereich des Turms wirkt. Vorzugsweise wird der Turmdrehkran über mindestens zwei Stützarme an bereits montierten Bereichen des Turms abgestützt und/oder mit diesen verbunden. Besonders bevorzugt erfolgt eine (erste) Abstützung im Bereich des Übergangs. Alternativ oder zusätzlich kann eine (weitere) Abstützung am montierten Bereich des oberen Zylinders erfolgen.

Gemäß einer Ausgestaltung des erfindungsgemäßen Verfahrens wird zumindest an dem Eckstiel, an welchem die Anbindung des Turmdrehkrans erfolgt, ein Schienenprofil in Längserstreckung des Eckstiels angebracht. Dieses Schienenprofil wird derart angebracht, dass sie oberhalb des Fundaments bis unterhalb des Drehgelenks des Turmdrehkrans verläuft. Die Anbindung des Schienenprofils erfolgt kraftschlüssig, insbesondere lokal an dem Eckstiel. Vorzugsweise dienen die Knoten entlang des Eckstiels als Anbindungspunkte für das Schienenprofil. An diesem Schienenprofil kann ebenfalls insbesondere an einem oder zwei Punkten ein Kran oder Hubwagen angebunden werden, welcher quasi über die Länge des Schienenprofils stufenlos rauf und runter verfahrbar sein kann. Nach der Anbringung des Schienenprofils kann dieses dazu genutzt werden, beispielsweise einen Fahrstuhl anzubringen, mit dem für Wartungs- und Instandsetzungsarbeiten das Personal und/oder Geräte zum Übergang transportiert werden können. Durch eine besonders bevorzugte Installation eines Krans an das Schienenprofil kann nur noch die Gitterstruktur über einen (Standard-)Kran errichtet werden, so dass anschließend der Kran an dem Schienenprofil zur Errichtung der restlichen Teile der Windenergieanlage insbesondere unterstützend genutzt werden kann.

Gemäß einer Ausgestaltung des erfindungsgemäßen Verfahrens kann der Turmdrehkran mit zunehmender Höhe des Turms insbesondere sukzessive über zusätzliche Segmente in seiner Höhe vergrößert werden. Durch Einfügen von weiteren Zwischenelementen kann der Mast des Turmdrehkrans quasi "mitwachsen" und somit vorzugsweise immer in der optimalen Höhe arbeiten.

### Kurze Beschreibung der Zeichnungen (Brief Description of Drawings)

Im Folgenden wird die Erfindung anhand von Zeichnungen näher erläutert. Gleiche Teile sind mit gleichen Bezugszeichen versehen. Im Einzelnen zeigen:
- Fig. 1: eine schematische, perspektivische Darstellung zum Zeitpunkt der Anbindung eines Turmdrehkrans an eine Gitterstruktur,
- Fig. 2: eine schematische, perspektivische Teildarstellung unterschiedlicher Anbindungspunkte eines Turmdrehkrans an eine Gitterstruktur,
- Fig. 3: eine schematische, perspektivische und vergrößerte Teildarstellung eines Anbindungspunktes in Figur 2 und
- Fig. 4 bis 7: eine schematische, perspektivische Darstellung zu unterschiedlichen Zeitpunkten bei der Erstellung eines Turms einer Windkraftanlage gemäß einer Ausführung der Erfindung.

### Beschreibung der bevorzugten Ausführungsformen (Best Mode for Carrying out the Invention)

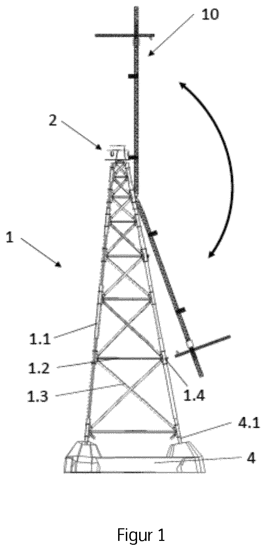

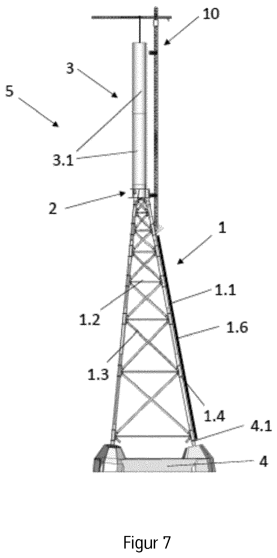

**Figur 1** zeigt eine schematische, perspektivische Darstellung einer bereits erstellten respektive montierten Gitterstruktur (1) als Teil einer noch zu errichtenden nicht dargestellten Windenergieanlage. Die Gitterstruktur (1) kann aus mehreren Teilen (1.1, 1.2, 1.3, 1.4, 1.5) entweder "liegend" zusammengebaut und anschließend mittels eines nicht dargestellten Krans aufgerichtet werden oder "stehend" in die Höhe, insbesondere unter Verwendung eines nicht dargestellten Krans, aufgebaut werden, oder eine Kombination aus "liegender" und "stehender" Montage unter Verwendung eines nicht dargestellten Krans. Am unteren Ende der Gitterstruktur (1) respektive an den unteren Enden der Eckstiele (1.1) der Gitterstruktur (1) ist ein Fundament (4) oder mehrere lokale Fundamente erstellt worden, welche insbesondere Mittel (4.1) aufweisen, die zur Aufnahme und/oder Anbindung des unteren Endes der Gitterstruktur (1) respektive der unteren Enden der Eckstiele (1.1) der Gitterstruktur (1) dienen. Neben der Gitterstruktur (1) kann auch der Übergang (2), welcher eine Verbindung zwischen einem noch zu erstellenden oberen Zylinder (3) des Turms (5), vgl. **Figur 7****,** einer nicht dargestellten Windenergieanlage darstellt, mittels des die Gitterstruktur (1) errichteten, nicht dargestellten Krans auf die Gitterstruktur (1) gehoben werden, welcher auf der Gitterstruktur (1) montiert und befestigt wird.

Nach der Montage der Gitterstruktur (1) wird ein Turmdrehkran (10) bereitgestellt, welcher an seinem unteren Ende ein Drehgelenk (10.1) aufweist. Der Turmdrehkran (10) umfasst neben dem Drehgelenk (10.1) an seinem (Fuß-)Ende einen Mast (10.3), beispielsweise einen Gittermast, welcher vorzugsweise aus mehreren Segmenten zusammengesetzt sein kann, einem vom Drehgelenk (10.1) beabstandeten (Kopf-)Ende mit einem Drehkranz, auf welchem ein Ausleger drehbar montiert ist. Entlang des Auslegers läuft insbesondere eine Laufkatze mit Hebemitteln, über welche Lasten heb- und senkbar sind. Bei Bedarf kann der Turmdrehkran (10) auch einen Gegenausleger optional mit (Gegen-)Gewicht(en) aufweisen, welcher in entgegengesetzter Richtung zur Ausrichtung des Auslegers verläuft. Der Turmdrehkran (10) wird über sein Drehgelenk (10.1) an einem der Eckstiele (1.1), welche mindestens ein Mittel (1.5) zur drehbaren Aufnahme des Drehgelenks (10.1) des Turmdrehkrans (10) aufweist, drehbar angebunden. Insbesondere kann unter Verwendung des nicht dargestellten Krans, welcher zur Erstellung der Gitterstruktur (1) und optional des Übergangs (2), auch das Heben und Anbinden des Turmdrehkrans (10) an die Gitterstruktur (1) erfolgen. Nach Anbindung des Turmdrehkrans (10) wird der Turmdrehkran (10) in eine vertikale Arbeitsposition gedreht, symbolisiert durch den Pfeil in Figur 1. Bevorzugt erfolgt die Anbindung des Turmdrehkrans (10) im oberen Drittel der Gitterstruktur (1).

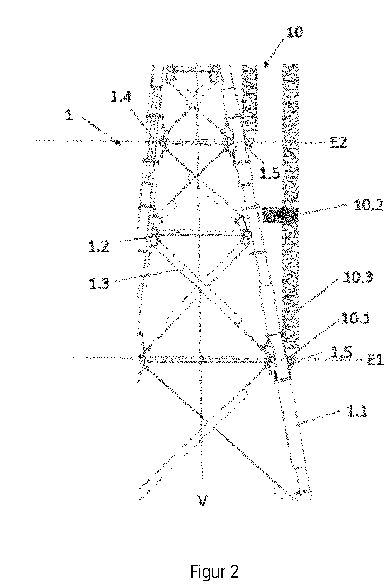

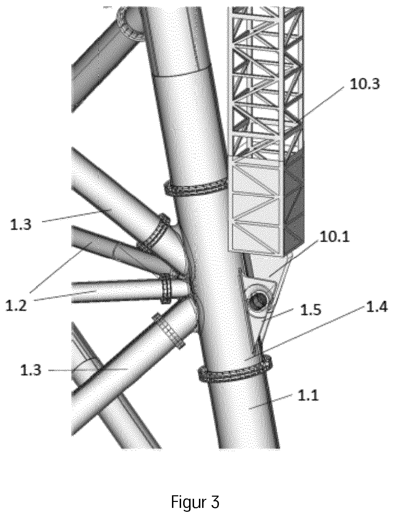

Um unterschiedliche Bauhöhen erreichen zu können, kann der Turmdrehkran (10) auf unterschiedlichen Ebenen (E1, E2) an der Gitterstruktur (1) angebunden werden, s. **Figur 2****.** Die Gitterstruktur (1) weist somit mindestens zwei Mittel (1.5) zur drehbaren Aufnahme des Drehgelenks (10.1) des Turmdrehkrans (10) an mindestens einem Eckstiel (1.1) oder verteilt auf mehrere Eckstiele in unterschiedlichen Ebenen, hier nicht dargestellt, auf. Vorzugsweise fungieren die Knoten (1.4), die entsprechende Mittel (1.5) zur drehbaren Aufnahme des Drehgelenks (10.1) des Turmdrehkrans (10) aufweisen, insbesondere auf unterschiedlichen Ebenen (E1, E2) jeweils als Anbindungspunkt. Eine schematische, perspektivische vergrößerte Teildarstellung eines als Anbindungspunkt ausgebildeten Knotens (1.4) ist in **Figur 3** gezeigt.

Die Gitterstruktur (1) für einen Turm (5) einer nicht dargestellten Windenergieanlage umfasst mindestens drei Eckstiele (1.1), welche in einem Winkel zur Vertikalen (V) der Gitterstruktur (1) zueinander geneigt sind, wobei die Eckstiele (1.1) im unteren Teil der Gitterstruktur (1) weiter voneinander beabstandet sind als im oberen Teil der Gitterstruktur (1), wobei jeder Eckstiel (1.1) aus mehreren Längsstreben zusammengesetzt ist. Des Weiteren umfasst die Gitterstruktur mindestens eine Querstrebe, vorzugsweise mehrere Querstreben (1.2), welche in einer horizontalen Ebene der Gitterstruktur (1) jeweils zwischen zwei Eckstielen (1.1) angeordnet und mit diesen verbunden sind. Des Weiteren umfasst die Gitterstruktur (1) mindestens eine Diagonalstrebe, vorzugsweise mehrere Diagonalstreben (1.3), welche zwischen zwei horizontalen Ebenen der Gitterstruktur (1) jeweils zwischen zwei Eckstielen (1.1) angeordnet und mit diesen verbunden sind. Ferner umfasst die Gitterstruktur (1) mindestens drei Knoten, vorzugsweise mehrere Knoten (1.4), welche in mindestens einer horizontalen Ebene der Gitterstruktur (1) jeweils zwischen den die Eckstiele (1.1) bildenden Längsstreben angeordnet sind und jeweils als Verbindungselement zwischen zwei Längsstreben, der mindestens eine Querstrebe (1.2) und der mindestens eine Diagonalstrebe (1.3) fungieren.

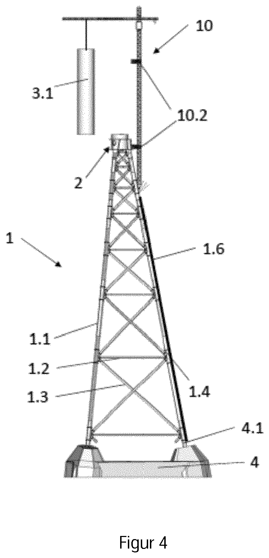

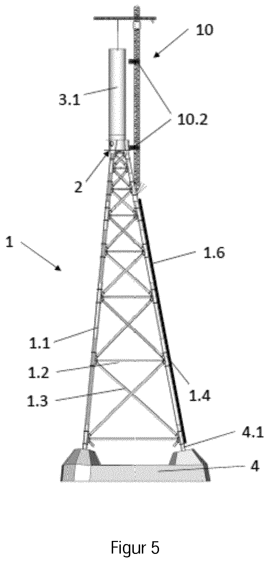

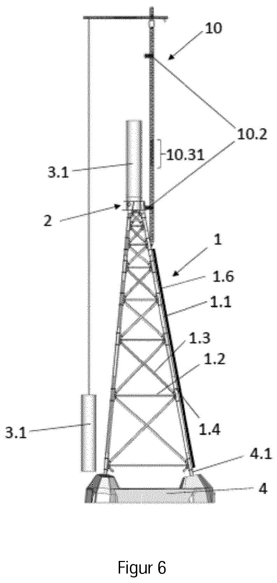

Die **Figuren 4 bis 7** zeigen in einer schematischen, perspektivischen Darstellung die Montage eines Turms (5) einer nicht dargestellten Windenergieanlage zu unterschiedlichen Zeitpunkten respektive das Errichten einer nicht dargestellten Windenergieanlage. Der Turmdrehkran (10) wird über mindestens einen Stützarm (10.2), welcher mit Abstand zum Drehgelenk (10.1) des Turmdrehkrans (10) am Turmdrehkran (10) angeordnet ist, an einem bereits montierten Bereich des Turms (5) abgestützt und/oder mit diesem verbunden. Besonders bevorzugt erfolgt eine (erste) Abstützung im Bereich des Übergangs (2). Alternativ oder zusätzlich kann eine (weitere) Abstützung am montierten Bereich des oberen Zylinders (3) erfolgen. Insbesondere ist der obere Zylinder (3), welcher auf dem Übergang (2) montiert und befestigt werden soll, aus mehreren einzelnen Segmenten (3.1) zusammengesetzt, welche jeweils einzeln über den Turmdrehkran (10) gehoben und anschließend jeweils montiert und (miteinander) befestigt werden. Mit zunehmender Höhe des Turms (5) kann insbesondere sukzessive über zusätzliche Segmente (10,31) der Turmdrehkran (10) in seiner Höhe vergrößert werden, so dass durch Einfügen von weiteren Zwischenelementen (10.31), vgl. **Figur 6****,** der Mast (10.3) des Turmdrehkrans (10) "mitwachsen" kann und somit vorzugsweise immer mit der optimalen Höhe gearbeitet werden kann.

An dem Eckstiel (1.1), an welchem die Anbindung des Turmdrehkrans (10) erfolgt, ist ein Schienenprofil (1.6) in Längserstreckung des Eckstiels (1.1) angebracht, s. Figuren 4 bis 7. Die Anbindung des Schienenprofils (1.6) kann kraftschlüssig, insbesondere lokal an dem Eckstiel (1.1) erfolgen, wobei vorzugsweise die Knoten (1.4) entlang des Eckstiels (1.1) als Anbindungspunkte für das Schienenprofil (1.6) dienen. An diesem Schienenprofil kann ein nicht dargestellter Kran oder Hubwagen insbesondere stufenlos verfahrbar angebunden werden.

Des Weiteren wird eine nicht dargestellte Gondel mittels Turmdrehkran (10) in Teilen oder als Ganzes auf den oberen Zylinder (3) gehoben und anschließend montiert und befestigt. Weitere nicht dargestellte Komponenten wie zum Beispiel Turbine und Rotorblätter werden vorzugsweise ebenfalls mittels Turmdrehkran (10) insbesondere zur Komplettierung der nicht dargestellten Windenergieanlage gehoben und in entsprechend ihrer Arbeitsposition montiert und befestigt.

Nach der Erstellung der nicht dargestellten Windenergieanlage wird der Turmdrehkran (10) aus seiner vertikalen Arbeitsposition wieder in seine Anbindungsposition gedreht, von dem Mittel (1.5) gelöst und insbesondere mittels eines nicht dargestellten Krans zu Boden gesenkt, wo der Turmdrehkran (10) entweder zum Errichten einer weiteren Windenergieanlage temporär verwendet oder demontiert wird.

Der Turm (5) einer nicht dargestellten Windenergieanlage ist bevorzugt für den Onshore-Bereich ausgelegt.

Die beschriebenen Merkmale sind alle, soweit technisch möglich, miteinander kombinierbar.

## Patentansprüche

1. Verfahren zum Errichten einer Windenergieanlage umfassend einen Turm (5) und einer auf dem Turm (5) drehbar angeordneten Gondel, wobei der Turm (5) eine untere Gitterstruktur (1), einen Übergang (2) und einen oberen Zylinder (3) umfasst, wobei der Übergang (2) den oberen Zylinder (3) mit der Gitterstruktur (1) verbindet, wobei die Gitterstruktur (1) mindestens drei Eckstiele (1.1), welche in einem Winkel zur Vertikalen der Gitterstruktur (1) zueinander geneigt sind, Querstreben (1.2) und/oder Diagonalstreben (1.3) aufweist, wobei zunächst die Gitterstruktur (1), auf die Gitterstruktur (1) der Übergang (2), auf dem Übergang (2) der Zylinder (3) und auf dem Zylinder (3) die Gondel nacheinander montiert werden, **dadurch gekennzeichnet, dass** nach der Montage der Gitterstruktur (1) ein Turmdrehkran (10) bereitgestellt wird, welcher an seinem unteren Ende ein Drehgelenk (10.1) aufweist, der Turmdrehkran (10) über sein Drehgelenk (10.1) an einem der Eckstiele (1.1) drehbar angebunden wird und nach der Anbindung der Turmdrehkran (10) in eine vertikale Arbeitsposition gedreht wird.

2. Verfahren nach Anspruch 1, wobei eine Anbindung des Turmdrehkrans (10) im oberen Drittel der Gitterstruktur (1) erfolgt.

3. Verfahren nach einem der vorgenannten Ansprüche, wobei eine Anbindung des Turmdrehkrans (10) an einem Knoten (1.4) der Gitterstruktur (1) erfolgt.

4. Verfahren nach einem der vorgenannten Ansprüche, wobei der Turmdrehkran (10) auf unterschiedlichen Ebenen (E1, E2) an der Gitterstruktur (1) angebunden werden kann.

5. Verfahren nach einem der vorgenannten Ansprüche, wobei der Turmdrehkran (10) über mindestens einen Stützarm (10.2), welcher mit Abstand zum Drehgelenk (10.1) des Turmdrehkrans (10) am Turmdrehkran (10) angeordnet ist, an einem bereits montierten Bereich des Turms (5) abgestützt und/oder verbunden wird.

6. Verfahren nach einem der vorgenannten Ansprüche, wobei zumindest an dem Eckstiel (1.1), an welchem die Anbindung des Turmdrehkrans (10) erfolgt, ein Schienenprofil (1.6) in Längserstreckung des Eckstiels (1.1) angebracht wird.

7. Verfahren nach einem der vorgenannten Ansprüche, wobei der Turmdrehkran (10) mit zunehmender Höhe des Turms (5) insbesondere sukzessive über zusätzliche Segmente in seiner Höhe vergrößert werden kann.

## Claims

1. A method for erecting a wind turbine comprising a tower (5) and a nacelle rotatably arranged on the tower (5), wherein the tower (5) comprises a lower lattice structure (1), a transition (2), and an upper cylinder (3), wherein the transition (2) connects the upper cylinder (3) to the lattice structure (1), wherein the lattice structure (1) comprises at least three corner posts (1.1), which are inclined relative to one another at an angle to the vertical of the lattice structure (1), cross braces (1.2), and/or diagonal braces (1.3), wherein first the lattice structure (1), then the transition (2) on the lattice structure (1), then the cylinder (3) on the transition (2), and then the nacelle on the cylinder (3) are mounted successively, **characterized in that** after the assembly of the lattice structure (1), a tower crane (10) is provided, which comprises a rotary joint (10.1) at its lower end, the tower crane (10) is rotatably connected via its rotary joint (10.1) to one of the corner posts (1.1), and after the connection the tower crane (10) is rotated into a vertical working position.

2. The method according to claim 1, wherein the tower crane (10) is connected in the upper third of the lattice structure (1).

3. The method according to one of the preceding claims, wherein the tower crane (10) is connected to a node (1.4) of the lattice structure (1).

4. The method according to one of the preceding claims, wherein the tower crane (10) can be connected to the lattice structure (1) at different levels (E1, E2).

5. The method according to one of the preceding claims, wherein the tower crane (10) is supported on and/or connected via at least one support arm (10.2), which is arranged on the tower crane (10) at a distance from the rotary joint (10.1) of the tower crane (10), to an already assembled region of the tower (5).

6. The method according to one of the preceding claims, wherein, at least on the corner post (1.1) to which the tower crane (10) is connected, a rail profile (1.6) is attached in the longitudinal direction of the corner post (1.1).

7. The method according to one of the preceding claims, wherein the tower crane (10) can be increased in height as the height of the tower (5) increases, in particular successively by means of additional segments.

## Revendications

1. Procédé de construction d'une éolienne comprenant une tour (5) et une nacelle montée de manière rotative sur la tour (5), la tour (5) comprenant une structure en treillis inférieure (1), une transition (2) et un cylindre supérieur (3), la transition (2) reliant le cylindre supérieur (3) à la structure en treillis (1), la structure en treillis (1) comprenant au moins trois montants d'angle (1.1), qui sont inclinés les uns par rapport aux autres selon un angle par rapport à la verticale de la structure en treillis (1), des entretoises transversales (1.2) et/ou des entretoises diagonales (1.3), la structure en treillis (1), puis la transition (2) sur la structure en treillis (1), puis le cylindre (3) sur la transition (2), puis la nacelle sur le cylindre (3) étant montés successivement, **caractérisé en ce qu'**après le montage de la structure en treillis (1), une grue à tour (10) est mise à disposition, laquelle comporte à son extrémité inférieure une articulation pivotante (10.1), la grue à tour (10) étant reliée de manière pivotante, par son articulation pivotante (10.1), à l'un des montants d'angle (1.1), et après la liaison, la grue à tour (10) est pivotée dans une position de travail verticale.

2. Procédé selon la revendication 1, dans lequel la liaison de la grue à tour (10) est réalisée dans le tiers supérieur de la structure en treillis (1).

3. Procédé selon l'une des revendications précédentes, dans lequel la liaison de la grue à tour (10) est réalisée à un nœud (1.4) de la structure en treillis (1).

4. Procédé selon l'une des revendications précédentes, dans lequel la grue à tour (10) peut être reliée à la structure en treillis (1) à différents niveaux (E1, E2).

5. Procédé selon l'une des revendications précédentes, dans lequel la grue à tour (10) est soutenue et/ou reliée, par l'intermédiaire d'au moins un bras de support (10.2), qui est disposé sur la grue à tour (10) à une distance de l'articulation pivotante (10.1) de la grue à tour (10), à une zone déjà montée de la tour (5).

6. Procédé selon l'une des revendications précédentes, dans lequel, au moins sur le montant d'angle (1.1) auquel la grue à tour (10) est reliée, un profilé de rail (1.6) est fixé dans le sens longitudinal du montant d'angle (1.1).

7. Procédé selon l'une des revendications précédentes, dans lequel la hauteur de la grue à tour (10) peut être augmentée à mesure que la hauteur de la tour (5) augmente, notamment successivement au moyen de segments supplémentaires.
